# EUROPÄISCHE PATENTANMELDUNG

(11) **EP 1 310 801 A1**
(43) Veröffentlichungstag der Anmeldung: **14.05.2003**
(21) Anmeldenummer: 01811086.6
(22) Anmeldetag: 13.11.2001
(51) Int. Cl.: G01P 15/08, G01V 1/18, G01H 9/00, H01S 3/067

(54) **Seismischer Faserlaser-Sensor**

(71) Anmelder: ABB RESEARCH LTD., 8050 Zürich (CH)
(72) Erfinder: Meier, Urs, 5303 Würenlingen (CH); Rochat, Etienne, Wivenhoe, Essex CO7 9EP (GB)
(74) Vertreter: ABB Patent Attorneys

(57) **Zusammenfassung**

Die Erfindung betrifft einen Faserlaser-Beschleunigungssensor (1). Der Sensor (1) umfasst eine federnd gelagerte seismische Masse (3) und einen mechanisch angekoppelten Faserlaser (2). Auslenkungen (30) der seismischen Masse (3) sind in eine longitudinale und/oder transversale Beanspruchung (20), d. h. Dehnung und Entlastung (20), des Faserlasers (2) umsetzbar. Die resultierenden Änderungen der optischen Eigenschaften der Faserlaserkavität (2) sind bei einmodigem Betrieb als Wellenlängenverschiebung und bei mehrmodigem Betrieb als Verschiebung einer Moden-Schwebungsfrequenz der Laseremission (9; 90, 91; 9a, 9b) messbar. Ausführungsbeispiele betreffen u. a. Aufhängungen des Faserlaser (2) zwischen entgegengesetzt einfedernden Federmitteln (4) oder eine unmittelbare radiale Quetschung des Faserlasers (2) durch die seismische Masse (3). Der Faserlaser-Beschleunigungssensor (2) zeichnet sich durch hohe Messempfindlichkeit, grossen Messbereich, Störunempfindlichkeit und Kompaktheit aus.

## Beschreibung

### TECHNISCHES GEBIET

Die vorliegende Erfindung bezieht sich auf das Gebiet der faseroptischen Messtechnik. Sie geht aus von einem faseroptischen Beschleunigungsensor nach dem Oberbegriff des unabhängigen Anspruchs.

### STAND DER TECHNIK

Bei der Erdölförderung müssen Bohrlöcher hinsichtlich seismischer Wellen sowie hinsichtlich Druck und Temperatur überwacht werden. Die Messung seismischer Wellen in Bohrlöchern ist schwierig, da die Amplituden sehr klein sind und im Bohrloch eine rauhe Messumgebung und engste Platzverhältnisse herrschen. Typischerweise treten Flüssigkeitsdrücke bis ca. 100 MPa (1000 bar) und Temperaturen bis über 200 °C auf.

In der WO 99/39214 wird ein faseroptischer Beschleunigungssensor offenbart. Der Sensor umfasst eine seismische Masse, die über Federmittel mit einem starren Gehäuseteil des Beschleunigungssensors verbunden ist, und einen dehnungsempfindlichen Faser-Bragg-Gitter Sensor, der zwischen der seismischen Masse und dem Gehäuseteil gehaltert ist. Wird der Sensor beschleunigt, bewirken die Trägheitsbewegungen der seismischen Masse Dehnungen des Faser-Bragg-Gitters und damit Änderungen der Bragg-Wellenlänge, die optisch ausgelesen werden können. Hierfür wird dem Faser-Bragg-Gitter Sensor über eine faseroptische Zuleitungsfaser spektral breitbandiges Licht zugeführt und die Wellenlängenverschiebung des am Bragg-Gitter gestreuten Lichts gemessen. Ein wesentlicher Nachteil des passiven Faser-Bragg-Gitter Sensors besteht darin, dass die Messempfindlichkeit und der dynamische Messbereich relativ klein sind und die physikalischen Dimensionen des Sensors relativ gross sind. Auch ist die Erfassung eines wellenlängenabhängigen optischen Signals durch unmittelbare spektroskopische Wellenlängenmessung, passive wellenlängenabhängige Filterung, Tracking mit einem durchstimmbaren Spektralfilter oder Interferometrie aufwendig.

In der WO 99/44023 wird ein Faserlaser-Drucksensor offenbart, bei dem eine laserverstärkende Faser und eine Sensorfaser zwischen zwei Faser-Bragg-Gitter Endreflektoren angeordnet sind. Die Sensorfaser besitzt eine Asymmetrie derart, dass durch isotropen Druck eine Doppelbrechung zwischen zwei linearen Polarisationsmoden oder zwischen den Raummoden LP₀₁ und LP₁₁^{gerade} induzierbar und als druckproportionale Schwebungsfrequenz messbar ist. Zur Messung seismischer Wellen ist der Sensor ungeeignet.

In dem U. S. Pat. No. 5,844,927 wird ein DFB (Distributed Feedback) Faserlaser-Sensor offenbart. Es wird eine doppelbrechende laserverstärkende Faser mit einem verteilten Faser-Bragg-Gitter Resonator verwendet, in dem zwei orthogonal polarisierte Moden mit geringfügig unterschiedlichen Wellenlängen oszillieren können. Bei einer Verwendung der laserverstärkenden Faser als Sensorfaser wird eine zusätzliche Doppelbrechung zwischen den Polarisationsmoden induziert und als kraftproportionale Schwebungsfrequenz gemessen. Es werden auch spektral separierte serielle und parallele Multiplexanordnungen mehrerer Faserlaser-Sensoren angegeben. Zur Messung eines hydrostatischen Differenzdrucks wird eine Transducer-Membran vorgeschlagen, die an die laserverstärkende Sensorfaser gekoppelt ist, beidseits einem Fluiddruck ausgesetzt ist und durch den Differenzdruck auslenkbar ist. Zur homogenen Kraftübertragung von der Membran auf die laserverstärkende Faser kann eine flache, verschiebliche Scheibe zwischen Membran und Sensorfaser vorhanden sein. Eine Messung seismischer Wellen ist nicht möglich.

### DARSTELLUNG DER ERFINDUNG

Aufgabe der vorliegenden Erfindung ist es, einen faseroptischen Beschleunigungssensor anzugeben, der sich durch eine verbesserte Messempfindlichkeit und Messdynamik auszeichnet. Diese Aufgabe wird erfindungsgemäss durch die Merkmale des unabhängigen Anspruchs gelöst.

Die Erfindung besteht in einem faseroptischen Beschleunigungssensor, umfassend eine seismische Masse, die bezüglich einer Basis des Beschleunigungssensors federnd gelagert ist, und einen faseroptischen Sensor, der mit der seismischen Masse in mechanischer Verbindung und mit einer Detektions- und Auswerteeinheit in optischer Verbindung steht, derart dass ein von Auslenkungen der seismischen Masse abhängiges Signal des faseroptischen Beschleunigungsensors erfassbar ist, wobei der faseroptische Sensor ein Faserlaser ist, der eine laserverstärkende Faser und mindestens einen Reflektor aufweist und durch eine Pumplichtquelle zu einer Laseremission anregbar ist, die Laseremission in Abhängigkeit von den Auslenkungen der seismischen Masse modulierbar ist und die Detektions- und Auswerteeinheit Mittel zur Erfassung der modulierten Laseremission aufweist. Die mechanische Ankopplung der seismischen Masse an den Faserlaser kann auf vielfältige Weise ausgeführt sein, sofern durch Auslenkungen der seismischen Masse Änderungen der optischen Eigenschaften des Faserlasers und damit des emittierten Laserlichts, wie z. B. einer Emissionswellenlänge oder einer Beatfrequenz zwischen zwei Emissionswellenlängen, induzierbar sind. Insbesondere sind Auslenkungen 30 der seismischen Masse 3 in eine longitudinale oder transversale Beanspruchung 20 des Faserlasers 2 umsetzbar. Die Mittel zur Erfassung des modulierten Laseremissionslichts können z. B. spektroskopische Messmittel, passive wellenlängenabhängige Filtermittel, durchstimmbare Spektralfiltermittel oder interferometrische Messmittel sein. Aufgrund der geringen spektralen Linienbreite besitzt der Faserlaser-Beschleunigungssensor ein ausserordentlich hohes Signalauflösungsvermögen und einen grossen Messbereich zur Erfassung seismischer Wellen. Das aktiv lasende Sensorelement ist rein optisch betreibbar und auslesbar. Mehrere Sensorelemente sind sehr einfach multiplexierbar. Der Sensor benötigt am Messkopf keinerlei aktive Elektronik, ist sehr kompakt auslegbar und ist damit für die rauhe, enge Messumgebung in Bohrlöchern bestens geeignet.

In einem ersten Ausführungsbeispiel ist die seismische Masse über mindestens ein Federmittel mit einer vorgebbaren, für eine Messung seismischer Wellen anpassbaren Federkraft und Federdämpfung bezüglich der Basis gelagert und ist und/oder sind eine Änderung einer Kavitätslänge, eines Brechungsindexes und/oder einer Doppelbrechung des Faserlasers durch eine Auslenkung der seismischen Masse induzierbar. Dadurch ist eine sorgfältige Anpassung der Messempfindlichkeit, Messdynamik und Bandbreite des Beschleunigungssensors an den verwendeten Faserlaser, das verwendete Detektionsverfahren und an die Amplitude und den Frequenzgang der zu messenden seismischen Beschleunigungen möglich.

Das Ausführungsbeispiel gemäss Anspruch 3 oder 5 hat den Vorteil, dass der Faserlaser mit Standardmitteln, wie z. B. Ferrulen, an der seismischen Masse, der Basis und/oder den Federmitteln befestigbar ist, dass Standard-Federmittel zur Lagerung der seismischen Masse verwendbar sind und dass das Messsignal gegebenenfalls, nämlich bei Halterung des Faserlasers zwischen entgegengesetzt einfedernden Federmitteln, vergrösserbar ist.

Das Ausführungsbeispiel gemäss Anspruch 4 oder 6 hat den Vorteil, dass der Faserlaser in unmittelbarer Nähe zur seismischen Masse befestigt ist und daher extrem kompakt und mechanisch robust gebaut werden kann.

Das Ausführungsbeispiel gemäss Anspruch 7a hat den Vorteil, dass die Faser-Bragg-Gitter Endreflektoren, die laserverstärkende Faser und gegebenenfalls das nichtverstärkende Sensorfasersegment unabhängig voneinander bezüglich ihrer optischen Eigenschaften optimierbar sind.

Das Ausführungsbeispiel gemäss Anspruch 7b hat den Vorteil, dass der Faserlaser-Beschleunigungssensor in seiner Längserstreckung extrem kurz gebaut werden kann und eine sehr stabile Laseremission aufweist.

Das Ausführungsbeispiel gemäss Anspruch 8 oder 9 hat den Vorteil, dass im Faserlaser mehrere nicht entartete Polarisationsmoden oder Raummoden mit nahe benachbarten Emissionswellenlängen anregbar sind, die insbesondere bei einer longitudinalen Faserdehnung oder Faserentlastung eine differentielle Wellenlängenverschiebung erleiden und deren Schwebungsfrequenz somit ein einfach messbares frequenzkodiertes Messsignal zur Bestimmung seismischer Beschleunigungen darstellt.

Weitere Ausführungen, Vorteile und Anwendungen der Erfindung ergeben sich aus abhängigen Ansprüchen sowie aus der nun folgenden Beschreibung und den Figuren.

### KURZE BESCHREIBUNG DER ZEICHNUNG

Es zeigen für einen erfindungsgemässen Faserlaser-Beschleunigungssensor:
- Fig. 1: ein Model für eine federnde Lagerung der seismischen Masse;
- Fig. 2a, 2b: Ausführungsbeispiele für eine Befestigung des Faserlasers parallel oder senkrecht zum Einfederungsweg der seismischen Masse;
- Fig. 3a: ein Ausführungsbeispiel eines Faserlasers mit einer einmodigen Laseremission;
- Fig. 3b: ein Ausführungsbeispiel eines Faserlasers mit einer zweimodigen Laseremission;
- Fig. 3c: ein Ausführungsbeispiel eines DFB-Faserlasers mit einem darin verteilt eingeschriebenen Faser-Bragg-Gitter Reflektor oder Resonator;
- Fig. 4: ein Ausführungsbeispiel für eine direkte Befestigung des Faserlasers in Längsrichtung an der seismischen Masse.

In den Figuren sind gleiche Teile mit gleichen Bezugszeichen versehen.

### WEGE ZUR AUSFÜHRUNG DER ERFINDUNG

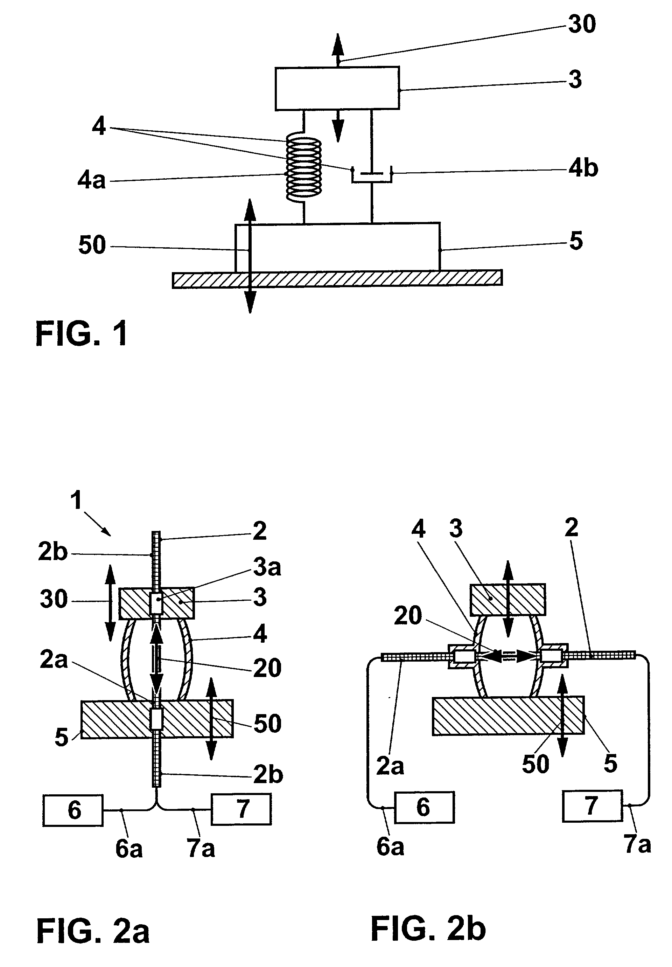

Fig. 1 zeigt schematisch eine seismische Masse 3, die über Federmittel 4, dargestellt durch eine Feder 4a und eine Dämpfung 4b, mit einer Basis 5 oder einem Gehäuse 5 eines Beschleunigungssensors 1 mechanisch verbunden ist. Bei einer von aussen angeregten Bewegung 50 der Basis 5 ist die seimische Masse 3 durch eine Trägheitsbewegung entlang einer Richtung 30 auslenkbar. Die Auslenkung 30 ist ein Mass für die zu messende seismische Welle oder Beschleunigung und ist faseroptisch detektierbar.

In Fig. 2a und Fig. 2b ist ein Beschleunigungssensor 1 dargestellt, bei dem die Auslenkung 30 erfindungsgemäss mit einem Faserlaser 2 detektiert wird. Der Faserlaser 2 umfasst eine laserverstärkende Faser 2a und optional ein nichtverstärkendes Sensorfasersegment (nicht dargestellt), die zwischen zwei Faser-Bragg-Gitter Endreflektoren 2b angeordnet sind, so dass eine dehnungs- und/oder doppelbrechungsempfindliche Laserkavität 2, 2a, 2b gebildet wird. Es sind eine Pumplichtquelle 6, z. B. ein Pumplaser 6, und eine optoelektronische Detektions- und Auswerteeinheit 7 über Zuführungsfasern 6a, 7a mit dem Faserlaser 2 einseitig (Fig. 2a) oder zweiseitig (Fig. 2b) optisch verbunden. Unabhängig von der optischen Ankopplungsweise kann der Faserlaser 2 mit seiner Längserstreckung zwischen der seismischen Masse 3 und der Basis 5 (Fig. 2a) oder zwischen zwei Federmitteln 4 mit im wesentlichen entgegengesetzten Einfederungswegen (Fig. 2b) unter einer vorgebbaren mechanischen Vorspannung gehaltert sein. Der Faserlaser 2 ist vorzugsweise mit seiner Längserstreckung parallel oder senkrecht zur Auslenkungsrichtung 30 der seismischen Masse 3 angeordnet und eine Faserdehnung 20 der Kavität 2 erfolgt im Gleichtakt oder Gegentakt zur Massenauslenkung 30. Die Federmittel 4 sind hier beispielsweise biegeelastische Membranen 4, auf welche die seismische Masse 3 seitlich drückend einwirkt. Die Ferrulhalterungen für den Faserlaser 2 sind an der seismischen Masse 3 und der Basis 5 (Fig. 2a) oder an den Federmitteln 4 (Fig. 2b) befestigt.

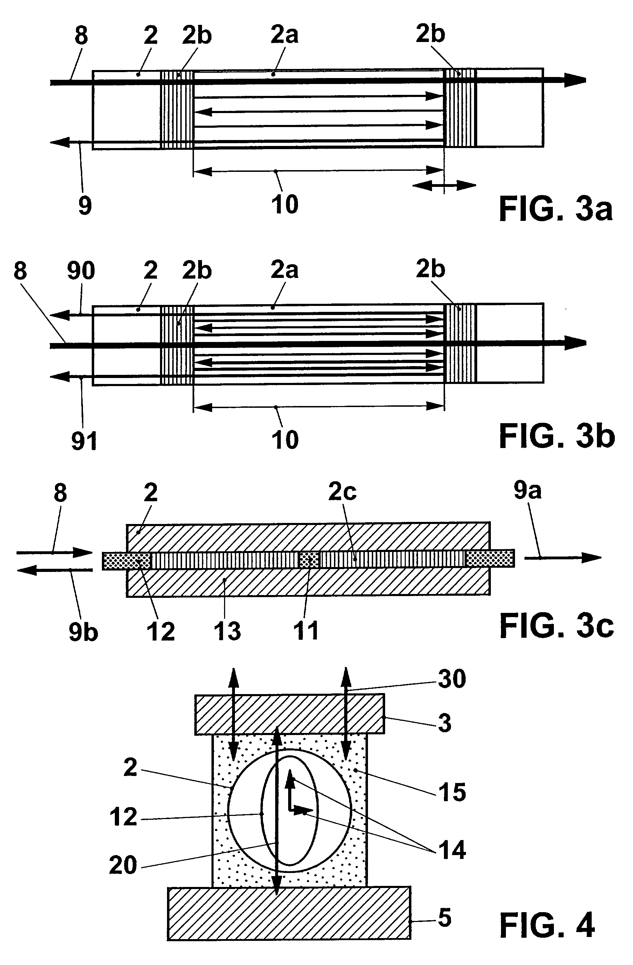

Verschiedenste andere mechanische Ankopplungsanordnungen des Faserlasers 2 an die Auslenkungen der seismischen Masse 3 sind ebenfalls denkbar. Z. B. sind die in der WO 99/39214 offenbarten Befestigungen einer optischen Faser an einer seismischen Masse auch auf den vorliegenden Faserlaser-Beschleunigungssensor 1 anwendbar. Die WO 99/39214 wird hiermit in ihrem gesamten Offenbarungsgehalt durch Bezugnahme als Bestandteil der Beschreibung aufgenommen. Insbesondere ist eine Anordnung mit einer elastischen Membran und einer daran z. B. zentral oder randseitig befestigten seismischen Masse (gemäss Fig. 2 oder 5) und mit einem Fasersensor möglich, der an der seismischen Masse (gemäss Fig. 1, 3a, 3b, 4a, 4b oder 5b) und/oder auf der Membran selber (gemäss Fig. 3a, 3b, 4a, 4b) befestigt ist. Ferner ist ein in Längsrichtung elastischer Stab (gemäss Fig. 2) oder Balg (gemäss Fig. 8) mit Aufnahmemitteln für den Fasersensor 2 einsetzbar. Oder es ist ein einseitig eingeklemmter Schwingarm (gemäss Fig. 6a, 6b oder 6c) zur Halterung der seismischen Masse 3 einsetzbar, wobei der Faserlaser 2 zwischen der seismischen Masse 3 und einer Basis 5 oder einem Gehäuse 5 des Beschleunigungssensors 1 gespannt ist. Auch eine Kombination solcher Ausführungsbeispiele ist denkbar. Vorteilhafterweise ist der Faserlaser 2 mit seiner Längserstreckung parallel oder senkrecht zu einem Einfederungsweg der seismischen Masse 3 angeordnet, um ein grosses Nutzsignal zu erhalten. Die maximale Amplitude der seismischen Masse 3 und damit der Faserdehnung kann durch einen mechanischen Stopper begrenzt sein.

Fig. 3a zeigt ein Ausführungsbeispiel eines Faserlasers 2, der mit einem Pumpstrahl 8 gepumpt wird und auf einem Lasermode 9 emittiert. Das dargestellte, rückwärtig emittierte Laserlicht 9 wird durch seismisch induzierte Änderungen der Kavitätslänge 10 in seiner Emissionswellenlänge moduliert.

In Fig. 3b ist der Fall dargestellt, dass mindestens zwei Lasermoden anschwingen, zwischen denen eine doppelbrechungsbedingte Wellenlängenverschiebung und damit eine Schwebungsfrequenz induzierbar ist, die auf einfache Weise mit einem Frequenzzähler messbar ist. Technische Einzelheiten zum optischen Detektionsverfahren und zur elektronischen Signalgewinnung, insbesondere zum mehrmodigen Betrieb eines Faserlasersensors 2, sind in der WO 99/44023 und in der WO 00/39552 offenbart, deren gesamter Inhalt hiermit durch Bezugnahme als Bestandteil der Beschreibung aufgenommen wird. Bevorzugt wird als laserverstärkende Faser 2a und/oder als optional vorhandenes nichtverstärkendes Sensorfasersegment eine Faser mit elliptischem Faserkern verwendet, in der mindestens zwei Raummoden ausbreitungsfähig und als Lasermoden resonanzfähig sind.

Mit Vorteil hat der Faserlaser 2 bei zwei- oder mehrmodigem Betrieb und Schwebungsfrequenzzählung mindestens abschnittsweise eine nicht rotationssymmetrische Struktur und insbesondere eine nichtverschwindende linear Doppelbrechung, so dass eine Laseremission 90, 91 mit mindestens zwei unterschiedlichen Polarisationsmoden oder Raummoden anregbar ist. Dadurch kann gemäss WO 00/39552 der Faserlaser 2 so ausgelegt werden, dass relativ niedrige und daher gut messbare Schwebungsfrequenzen resultieren. Man beachte, dass in der WO 00/39552 die nicht rotationssymmetrische Struktur dazu dient, mit einem Faserlaser eine isotrope Messgrösse wie Druck oder Temperatur zu messen. Im Gegensatz hierzu dient die nicht rotationssymmetrische Struktur beim Beschleunigungssensor 1 dazu, bei Dehnung des Faserlasers 2 eine Änderung der linearen Doppelbrechung und damit eine differentielle Verschiebung der Emissionswellenlängen unterschiedlicher Lasermoden sicherzustellen. Im unbelasteten Zustand oder unter Vorspannung am Arbeitspunkt muss jedoch keine Doppelbrechung vorhanden sein.

Gemäss Fig. 2 in der WO 00/39552 kann eine nicht rotationssymmetrische Struktur z. B. dadurch realisiert sein, dass die laserverstärkende Faser 2a und/oder ein optional im Faserlaser 2 vorhandenes nichtverstärkendes Sensorfasersegment einen elliptischen Kern, eine "bow-tie"-Struktur, eine "panda"-Struktur, eine "D-shape"-Struktur, eine "side-hole"-Struktur, eine elliptische Faserhülle oder eine teilweise angeschliffene Faserhülle aufweist oder eine mikrostrukturierte Faser mit einer nicht rotationssymmetrischen Struktur ist.

Bei mehrmodigem Betrieb kann auch ein Faserlaser 2 mit einer im unbelasteten Zustand rotationssymmetrischen Struktur verwendet werden, wenn der Faserlaser 2 im Beschleunigungssensor 1 auf eine transversale Quetschung/Dehnung gemäss Fig. 4 beansprucht ist, durch die eine lineare Doppelbrechung induzierbar ist.

Bei einmodigem Betrieb genügt es, wenn durch die Ankopplung des Faserlasers 2 an die seismische Masse 3 eine Änderung des optischen Weges, d. h. eine Änderung der Kavitätslänge und/oder eines Brechungsindexes, im Faserlaser 2 und damit eine Wellenlängenänderung mindestens eines Lasermodes 9 induzierbar ist. Dies ist unabhängig von der Symmetrie des Faserlasers 2 möglich, wenn der Faserlaser 2 z. B. durch eine longitudinale Faserdehnung/entlastung gemäss Fig. 2a und 2b oder durch eine transversale Faserquetschung/dehnung beansprucht ist.

Insbesondere können mehrere Faserlaser 2 zur Messung von mehreren Beschleunigungen, insbesondere entlang zueinander orthogonaler oder paraller Achsen, angeordnet sein und in einem Fasernetzwerk durch Wellenlängen-, Frequenzund/oder Zeitmultiplexanordnungen selektiv auslesbar sein. Mit Vorteil sind die in der WO 99/44023 und WO 00/39552 beschriebenen Faserlasersensoren zur Druck-, Druckdifferenz-, Strömungsgeschwindigkeits- und Temperaturmessung auch mit dem hier offenbarten Faserlaser-Beschleunigungssensor 2 kombinierbar und insbesondere multiplexierbar.

Fig. 3c zeigt ein Ausführungsbeispiel, in dem anstelle von Endreflektoren ein in die laserverstärkende Faser 2a verteilt eingeschriebener Faser-Bragg-Gitter Resonator 2c vorhanden ist. Dabei besitzt eine Gitterstruktur des Faser-Bragg-Gitter Resonators 2c vorzugsweise in einer Mitte des Faser-Bragg-Gitters 2c einen Phasensprung von π+m*2*π, oder eine Gitterstruktur des Faser-Bragg-Gitter Resonators 2c weist zwei Faser-Bragg-Gitter 2c (nicht dargestellt) mit einer über ihre Länge verteilten Phasenverschiebung von π+m*2*π auf, wobei m eine ganze Zahl bezeichnet.

In Fig. 4 ist eine alternative Ankopplung der seismischen Masse 3 an den Faserlaser-Sensor 2 dargestellt. In diesem Fall ist der Faserlaser 2 zwischen der seismischen Masse 3 und der Basis 5 mit einer vorgebbaren mechanischen Vorspannung radial oder transversal eingeklemmt. Dabei ist das Federmittel 4 der Faserlaser 2 selber und/oder eine Fasereinbettung 15 des Faserlasers 2. Vorzugsweise ist der Faserlaser 2 mit seiner Längserstreckung senkrecht zu einem Einfederungsweg der seismischen Masse 3 angeordnet. In dieser Anordnung ist im wesentlichen eine Doppelbrechung oder Doppelbrechungsänderung 14 induzierbar, die wiederum in einem einmodig betriebenen Faserlaser 2 als Wellenlängenverschiebung und in einem mehrmodig betriebenen Faserlaser 2 als Verschiebung einer Moden-Schwebungsfrequenz der Laseremission 9; 90, 91; 9a, 9b messbar ist.

### BEZUGSZEICHENLISTE

- 1: Faserlaser-Beschleunigungssensor
- 2: Faserlaser, Sensorfaser
- 2a: laserverstärkende Faser, dotierte Faser
- 2b: Bragg-Gitter Reflektor
- 2c: Faser-Bragg-Gitter Resonator
- 20: Dehnung der Faserlaser-Kavität
- 3: seismische Masse
- 3a: Faserhalterung, Ferrul
- 30: Auslenkung der seismischen Masse
- 4: Federmittel
- 4a: elastische Feder
- 4b: Dämpfung
- 5: Basis
- 50: Auslenkung der Basis
- 6: Pumplichtquelle, Pumplaser
- 7: optoelektronische Detektions- und Auswerteeinheit
- 6a, 7a: Zuführungsfasern
- 8: Pumpstrahl
- 9, 90, 91: Laseremission, Sensorstrahl(en)
- 9a: Vorwärts-Laseremission
- 9b: Rückwärts-Laseremission
- 10: Kavitätslänge
- 11: π-Phasensprung
- 12: Faserkern (rotationssymmetrisch, elliptisch)
- 13: Faserhülle ("cladding")
- 14: Hauptachsen und Doppelbrechung des elliptischen Faserkerns
- 15: Fasereinbettung, Federmittel

## Patentansprüche

1. Faseroptischer Beschleunigungssensor (1), insbesondere geeignet zur Messung seismischer Wellen in Erdölbohrlöchern, umfassend eine seismische Masse (3), die bezüglich einer Basis (5) des Beschleunigungssensors (1) federnd gelagert ist, und einen faseroptischen Sensor (2), der mit der seismischen Masse (3) in mechanischer Verbindung und mit einer Detektions- und Auswerteeinheit (7) in optischer Verbindung steht, derart dass ein von Auslenkungen (30) der seismischen Masse (3) abhängiges Signal des faseroptischen Beschleunigungssensors (1) erfassbar ist, **dadurch gekennzeichnet, dass**
a) der faseroptische Sensor (2) ein Faserlaser (2) ist, der eine laserverstärkende Faser (2a) und mindestens einen Reflektor (2b, 2c) aufweist und durch eine Pumplichtquelle (8) zu einer Laseremission (9; 90, 91; 9a, 9b) anregbar ist,
b) wobei in Abhängigkeit von den Auslenkungen (30) der seismischen Masse (3) die Laseremission (9; 90, 91; 9a, 9b) modulierbar ist und
c) die Detektions- und Auswerteeinheit (7) Mittel zur Erfassung der modulierten Laseremission (9; 90, 91; 9a, 9b) aufweist.

2. Faseroptischer Beschleunigungssensor (1) nach Anspruch 1, **dadurch gekennzeichnet, dass**
a) die seismische Masse (3) über mindestens ein Federmittel (4) mit einer vorgebbaren, für eine Messung seismischer Wellen anpassbaren Federkraft und Federdämpfung bezüglich der Basis (5) gelagert ist und
b) durch eine Auslenkung (30) der seismischen Masse (3) eine Änderung einer Kavitätslänge (10), eines Brechungsindexes und/oder einer Doppelbrechung (14) des Faserlasers (2) induzierbar ist und/oder sind.

3. Faseroptischer Beschleunigungssensor (1) nach Anspruch 2, **dadurch gekennzeichnet, dass**
a) der Faserlaser (2) in seiner Längserstreckung zwischen der seismischen Masse (3) und der Basis (5) oder zwischen zwei Federmitteln (4) mit im wesentlichen entgegengesetzten Einfederungswegen mit einer vorgebbaren mechanischen Vorspannung gehaltert ist und
b) im wesentlichen eine Änderung der Kavitätslänge (10) induzierbar ist, die in einem einmodig betriebenen Faserlaser (2) als Wellenlängenverschiebung und in einem mehrmodig betriebenen Faserlaser (2) als Verschiebung einer Moden-Schwebungsfrequenz der Laseremission (9; 90, 91; 9a, 9b) messbar ist.

4. Faseroptischer Beschleunigungssensor (1) nach Anspruch 2, **dadurch gekennzeichnet, dass**
a) der Faserlaser (2) zwischen der seismischen Masse (3) und der Basis (5) mit einer vorgebbaren mechanischen Vorspannung radial eingeklemmt ist und
b) im wesentlichen eine Änderung der Doppelbrechung (14) induzierbar ist, die in einem einmodig betriebenen Faserlaser (2) als Wellenlängenverschiebung und in einem mehrmodig betriebenen Faserlaser (2) als Verschiebung einer Moden-Schwebungsfrequenz der Laseremission (9; 90, 91; 9a, 9b) messbar ist.

5. Faseroptischer Beschleunigungssensor (1) nach einem der Ansprüche 2-3, **dadurch gekennzeichnet, dass**
a) das Federmittel (4) eine elastische Membran (4), ein in Längsrichtung elastischer Stab oder Balg, ein Schwingarm oder eine Kombination solcher Elemente ist und
b) insbesondere dass der Faserlaser (2) mit seiner Längserstreckung parallel oder senkrecht zu einem Einfederungsweg der seismischen Masse (3) angeordnet ist.

6. Faseroptischer Beschleunigungssensor (1) nach einem der Ansprüche 2 oder 4, **dadurch gekennzeichnet, dass**
a) das Federmittel (4) der Faserlaser (2) selber und/oder eine Fasereinbettung (15) des Faserlasers (2) ist und
b) insbesondere dass der Faserlaser (2) mit seiner Längserstreckung senkrecht zu einem Einfederungsweg der seismischen Masse (3) angeordnet ist.

7. Faseroptischer Beschleunigungssensor (1) nach einem der vorangehenden Ansprüche, **dadurch gekennzeichnet, dass**
a) der Faserlaser (2) zwei Faser-Bragg-Gitter Endreflektoren (2b) aufweist, zwischen denen die laserverstärkende Faser (2a) und optional ein nichtverstärkendes Sensorfasersegment angeordnet ist oder sind oder
b) die laserverstärkende Faser (2a) einen darin verteilt eingeschriebenen Faser-Bragg-Gitter Resonator (2c) aufweist.

8. Faseroptischer Beschleunigungssensor (1) nach einem der vorangehenden Ansprüche, **dadurch gekennzeichnet, dass** der Faserlaser (2) mindestens abschnittsweise eine nicht rotationssymmetrische Struktur, insbesondere eine nichtverschwindende lineare Doppelbrechung, aufweist, in der eine Laseremission (90, 91) mit mindestens zwei nichtentarteten Polarisationsmoden oder Raummoden anregbar ist.

9. Faseroptischer Beschleunigungssensor (1) nach einem der vorangehenden Ansprüche, **dadurch gekennzeichnet, dass** die laserverstärkende Faser (2a) und/oder ein optional im Faserlaser (2) vorhandenes nichtverstärkendes Sensorfasersegment einen elliptischen Kern, eine "bow-tie"-Struktur, eine "panda"-Struktur, eine "sidehole"-Struktur, eine "D-shape"-Struktur, eine "sidehole"-Struktur, eine elliptische Faserhülle oder eine teilweise angeschliffene Faserhülle aufweist oder eine mikrostrukturierte Faser mit einer nicht rotationssymmetrischen Struktur ist.

10. Faseroptischer Beschleunigungssensor (1) nach einem der vorangehenden Ansprüche, **dadurch gekennzeichnet, dass** mehrere Faserlaser (2) zur Messung von mehreren Beschleunigungen, insbesondere entlang zueinander orthogonaler oder paraller Achsen, angeordnet sind und in einem Fasernetzwerk durch Wellenlängen-, Frequenzund/oder Zeitmultiplexanordnungen selektiv auslesbar sind.
